Europäisches Patentamt

European Patent Office

Office européen des brevets

(11) Veröffentlichungsnummer: **0 451 450 A2**

# EUROPÄISCHE PATENTANMELDUNG

(21) Anmeldenummer: **91101574.1**

(51) Int. Cl.⁵: **H04N 5/65**

(22) Anmeldetag: **06.02.91**

(30) Priorität: **11.04.90 DE 9004191 U**

(43) Veröffentlichungstag der Anmeldung:
**16.10.91 Patentblatt 91/42**

(84) Benannte Vertragsstaaten:
**AT CH DE FR GB LI NL SE**

(71) Anmelder: **REHAU AG + Co
Rheniumhaus
W-8673 Rehau(DE)**

(72) Erfinder: **Der Erfinder hat auf seine Nennung
verzichtet**

(54) Profilleiste zum Einfassen von Scheiben.

(57) Die Erfindung betrifft eine Profilleiste zum Einfassen von Scheiben, wobei der Scheibenrand beidseitig von Leistenteilen übergriffen wird. An den Leistenteilen sind Befestigungsmittel angeordnet. Das Wesentliche der Erfindung wird darin gesehen, daß die Leistenteile (2, 3) L-förmig gestaltet sind. Die Leistenteile (2, 3) sind über einen flexiblen Wandbereich (4) einstückig miteinander verbunden. Die Schenkel (21, 31) der Leistenteile (2, 3) weisen an ihren freien Endbereichen zur Scheibe (5) gerichtete Klebeelemente (24, 34) auf.

EP 0 451 450 A2

Die Neuerung betrifft eine Profilleiste zum Einfassen von Scheiben mit den Scheibenrand beidseitig übergreifenden Leistenteilen und an diesen angeordneten Befestigungsmitteln.

Bei der Verwendung von oberflächenbehandelten Glasscheiben als Vorsatzfilter für beispielsweise Datenbildschirme sind Profilsysteme bekannt, die einerseits zur Halterung der Glasscheibe und andererseits zur Festlegung am Datengerät dienen. Es handelt sich hierbei um aufwendige, mehrteilige Profilsysteme, bei denen ein Teilprofil zunächst mit den zugeordneten Randbereichen der Scheibe verbunden wird. Dieses Verbundteil wird danach in ein Trägerprofil eingesetzt und der gesamte Aufbau mit einer am Datengehäuse befestigten Halterung verbunden.

Hier setzt die Neuerung ein, die es sich zur Aufgabe gestellt hat, das bekannte aufwendige Profilsystem zu vereinfachen sowie den Herstell- und Montageaufwand zu verringern. Neuerungsgemäß wird dazu vorgeschlagen, daß die Leistenteile L-förmig gestaltet und über einen flexiblen Wandbereich einstückig miteinander verbunden sind, und daß die Schenkel der Leistenteile an ihren freien Endbereichen zur Scheibe gerichtete Klebeelemente aufweisen.

Der fertigungstechnische Vorteil dieser Kombinationsleiste, bei der aus hartem Material bestehende Leistenteile über eine Brücke von weich eingestelltem Material miteinander verbunden sind, besteht darin, daß diese Leistenkombination einstückig im Wege des Extrusionsverfahrens hergestellt werden kann.

Der anwendungstechnische Vorteil dieser Kombination ist darin zu sehen, daß nicht mehr verschiedene Profilteile in aufwendigen Montageverfahren miteinander verbunden werden müssen, sondern daß nur ein einziges Profil durch Biegen der weich eingestellten Materialbrücke zum Festlegen auf dem Scheibenrand und zur Befestigung am Datengehäuse dient.

Es hat sich hierbei als vorteilhaft herausgestellt, daß die Längenabmessung des flexiblen Wandbereichs größer ist als die Dicke der Scheibe. Auf diese Weise können unterschiedliche Glasdicken mit ein- und demselben Profil belegt werden. Ferner ist der flexible Wandbereich an die kurzen Schenkel der Leistenteile angelenkt, wobei der kurze Schenkel des vorderen Leistenteils als Anschlag für die Scheibe ausgebildet ist.

Es hat sich als zweckmäßig erwiesen, daß in die zu den kurzen Schenkeln gerichtete, innenliegende Oberfläche des flexiblen Wandbereichs längsverlaufend eine kerbenartige Vertiefung eingebracht ist. Das hat den Vorteil, daß bei der Verschwenkung des vorderen Leistenteils zur Umfassung des Scheibenrandes der flexible Wandbereich exakt an der kerbenartigen Vertiefung umgelenkt wird, so daß sich, nach außen gerichtet, ein optisch einwandfreier Anblick des Biegebereichs ergibt. Dies ist besonders dann wesentlich, wenn der flexible Wandbereich in einer anderen Farbe gehalten ist als die starren, hart eingestellten Leistenteile.

Schließlich bringt es Vorteile, daß der lange Schenkel des hinteren Leistenteils an seinem freien Ende in eine Rundung übergeht, an die querschnittsgleich und die Rundung fortsetzend, ein weicher Halteteil einstückig angeformt ist.

Das Hereinziehen des hart eingestellten Schenkels in die Rundung ergibt eine Verstärkung dieses Schenkels gegen Biegebeanspruchungen. Dieser Vorteil wäre anders nur durch entsprechende Querschnittsverstärkungen des hinteren Leistenteils zu erzielen.

In der Zeichnung ist ein Ausführungsbeispiel der neuerungsgemäßen Profilleiste schematisch dargestellt; es zeigt:

Fig. 1    die Profilleiste in gestreckter Form
Fig. 2    die Profilleiste in ihrem Einsatz am Scheibenrand

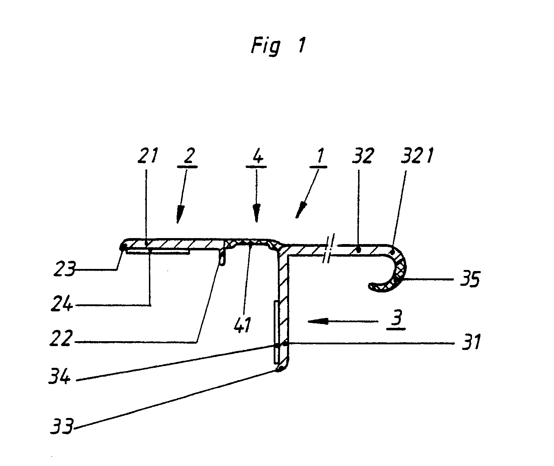

Fig. 1 zeigt die Profilleiste 1 mit ihrem vorderen Leistenteil 2 und dem hinteren Leistenteil 3. Der vordere Leistenteil 2 ist L-förmig gestaltet und besteht aus dem längeren Schenkel 21 und dem kürzeren Schenkel 22. An der Innenseite des längeren Schenkels 21 , der an seinem freien Ende in einer nasenförmigen Rundung 23 verläuft, ist ein doppelseitiges Klebeband 24 angeordnet.

Der hintere Leistenteil 3 ist ebenfalls L-förmig gestaltet und besteht aus dem kürzeren Schenkel 31 und dem längeren Schenkel 32. Der kürzere Schenkel 31 verläuft an seinem freien Ende in einen nasenartigen Fortsatz 33 und in dessen Bereich ist auch bei diesem Schenkel ein doppelseitiges Klebeband 34 angeordnet. Der längere Schenkel 32 geht an seinem freien Ende in die Rundung 321 über. An diese Rundung 321 ist querschnittsgleich und die Rundung fortsetzend das weiche Halteteil 35 einstückig angeformt. Mit diesem weichen Halteteil 35 wird die Profilleiste in ihrem Endsitz am Datengehäuse festgehalten.

Die beiden Leistenteile 2, 3 sind über den flexiblen Wandbereich 4 einstückig miteinander verbunden. Der flexible Wandbereich 4 besitzt an seiner zu den kurzen Schenkeln 22, 31 gerichteten Oberfläche die längsverlaufend eingebrachte kerbenartige Vertiefung 41. Diese kerbenartige Vertiefung kann im Mittelbereich des flexiblen Wandbereichs eingebracht sein.

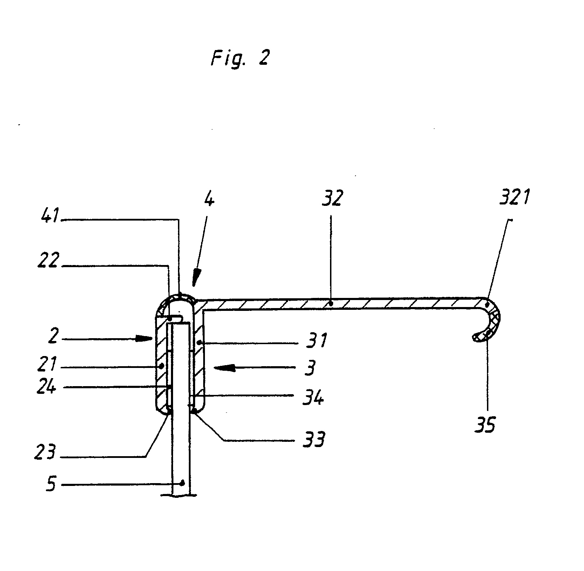

Fig. 2 zeigt die Profilleiste 1 in ihrer Einsatzstellung am Rand der Scheibe 5. Aus dieser Darstellung ist deutlich zu sehen, daß der lange Schenkel 21 und der kurze Schenkel 31 der Leistenteile 2, 3 den Rand der Scheibe 5 übergreifen. Die Scheibe 5 stößt in der gezeigten Darstellung am kurzen Schenkel 22 des Leistenteils 2 an, wobei dieser kurze Schenkel 22 als Verschiebebegrenzung dient. Der flexible Wandbereich überspannt den Spalt zwischen den Leistenteilen 2, 3 brückenartig, wobei seine Anlenkung in der Ebene des langen Schenkels 21 des Leistenteils 2 eine optisch einwandfreie Abgrenzung ergibt.

Die Profilleiste 1 ist nach dem Entfernen der Abdeckungen von den doppelseitigen Klebebändern 24, 34 auf den Rand der Scheibe aufgesetzt, wobei die Leistenteile 2, 3 um den Rand der Scheibe 5 gelegt werden. Nach dem Anschlag des Scheibenrandes am kurzen Schenkel 22 des Leistenteils 2 wird der lange Schenkel 21 des Leistenteils 2 und der kurze Schenkel 31 des Leistenteils 3 an den Rand der Scheibe 5 angepresst und damit auf dem Scheibenrand verklebt. Die Kombination Scheibe 5 und Profilleiste 1 kann nunmehr vor dem Bildschirm des Datensichtgerätes über den langen Schenkel 32 des Leistenteils 3 und dessen freien Endbereich 321, 35 festgelegt werden.

hinteren Leistenteils (3) an seinem freien Ende in eine Rundung (321) übergeht, an die querschnittsgleich und die Rundung (321) fortsetzend ein Halteteil (35) aus weich eingestelltem Kunststoffmaterial einstückig angeformt ist.

**Patentansprüche**

1. Profilleiste zum Einfassen von Scheiben mit den Scheibenrand beidseitig übergreifenden Leistenteilen und an diesen angeordneten Befestigungsmitteln, dadurch gekennzeichnet, daß die Leistenteile (2, 3) L-förmig gestaltet und über einen flexiblen Wandbereich (4) einstückig miteinander verbunden sind, und daß die Schenkel (21, 31) der Leistenteile (2, 3) an ihren freien Endbereichen zur Scheibe (5) gerichtete Klebeelemente (24, 34) aufweisen.

2. Profilleiste nach Anspruch 1, dadurch gekennzeichnet, daß die Längenabmessung des flexiblen Wandbereichs (4) größer ist als die Dicke der Scheibe (5).

3. Profilleiste nach Ansprüchen 1 und 2, dadurch gekennzeichnet, daß der flexible Wandbereich (4) im Bereich der kurzen Schenkel (22, 31) der Leistenteile (2, 3) angelenkt ist.

4. Profilleiste nach Anspruch 3, dadurch gekennzeichnet, daß der kurze Schenkel (22) des vorderen Leistenteils (2) als Anschlag für die Scheibe (5) ausgebildet ist.

5. Profilleiste nach Anspruch 1, dadurch gekennzeichnet, daß in die zu den kurzen Schenkeln (22, 31) gerichtete, innenliegende Oberfläche des flexiblen Wandbereichs (4) längsverlaufend eine kerbenartige Vertiefung (41) eingebracht ist.

6. Profilleiste nach Anspruch 1, dadurch gekennzeichnet, daß der lange Schenkel (32) des

Fig 1

Fig. 2